# FASCICULE DE BREVET EUROPEEN

(11) **EP 1 470 942 B1**
(45) Date de publication et mention de la délivrance du brevet: **21.03.2007**
(21) Numéro de dépôt: 04300214.6
(22) Date de dépôt: 21.04.2004
(51) Int. Cl.: B60J 1/20

(54) **Agencement pour la fixation d'un support de rideau pare-soleil**
Anordnung für die Befestigung eines Trägers für einen Sonnenvorhang
Arrangement to fasten a support of a sun curtain

(30) Priorité: 23.04.2003 FR 0304969
(43) Date de publication de la demande: 27.10.2004
(73) Titulaire: Renault s.a.s., 92100 Boulogne Billancourt (FR)
(72) Inventeur: Caffarri, Sergio Renault s.a.s., 78800 Houilles (FR)

(56) Documents cités:
- EP-A- 1 129 871
- DE-A- 3 822 378

## Description

L'invention concerne un agencement pour la fixation d'un support de rideau pare-soleil.

L'invention concerne plus particulièrement un agencement pour la fixation d'un support de rideau pare-soleil sur la paroi interne d'un montant globalement vertical d'une fenêtre latérale de véhicule automobile. du type dans lequel le support est fixé sur le montant de manière que le rideau puisse occuper au moins une position d'occultation, dans laquelle le rideau couvre au moins une partie de la fenêtre, et une position escamotée.

Le document DE 3822378 décrit un agencement pour la fixation d'un support de rideau pare-soleil comme décrit dans le préambule de la revendication 1.

La présente invention apporte un perfectionnement au support de rideau pare-soleil proposé par la demanderesse dans la demande de brevet français n°01.13507.

L'invention vise à proposer une solution simple, économique, et efficace, pour fixer le support de rideau pare-soleil dans l'habitacle d'un véhicule.

Dans ce but, l'invention propose un agencement du type décrit précédemment, caractérise en ce que :
- la paroi interne du montant comporte au moins une plaque de fixation qui est munie d'un trou axial,
- la paroi externe du support comporte au moins un pion de fixation qui s'étend axialement vers l'extérieur pour être reçu dans le trou de la plaque, et qui comporte au moins une surface sensiblement radiale de butée, orientée vers l'intérieur,
et, en position montée du support sur le montant, une agrafe est insérée transversalement, du côté de la face externe de la plaque de fixation, de manière qu'une surface sensiblement radiale d'appui, orientée vers l'extérieur, de l'agrafe, vienne se positionner en regard axialement de la surface de butée du pion et retienne axialement le pion dans le trou.

Selon d'autres caractéristiques de l'invention:
- l'agrafe comporte deux surfaces d'appui appartenant respectivement à deux bras de l'agrafe qui sont parallèles à la direction transversale d'insertion, et le pion comporte deux surfaces de butée, sensiblement diamétralement opposées, qui sont associées respectivement à chaque surface d'appui de l'agrafe ;
- le corps du pion est muni d'au moins une rainure transversale, et une surface sensiblement radiale de la rainure forme la surface de butée du pion :
- le pion s'étend axialement depuis le fond d'une cavité réalisée dans la paroi externe du support, et la plaque de fixation forme un bossage globalement complémentaire de la cavité, le trou étant agencé globalement au sommet du bossage, de manière à minimiser l'espace axial entre la paroi externe du support et la paroi interne du montant ;
- la cavité comporte une paroi axiale sensiblement verticale qui est munie d'une ouverture transversale pour permettre le passage de l'agrafe ;
- le support comporte un logement prévu pour recevoir l'agrafe de manière complémentaire ;
- le logement comporte des moyens pour le guidage transversal de l'agrafe ;
- le corps du pion est globalement cylindrique ;
- la plaque de fixation est rapportée sur le montant de la fenêtre :
- la plaque de fixation est réalisée en tôle et en ce qu'elle est soudée sur le montant de la fenêtre.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée qui représente schématiquement une portière de véhicule comportant une fenêtre et un support de rideau pare-soleil associé ,
- la figure 2 est une vue en perspective éclatée avec arrachements qui représente schématiquement un agencement réalisé conformément aux enseignements de l'invention pour la fixation du support de rideau pare-soleil sur le montant de la fenêtre de la figure 1 ;
- la figure 3 est une vue en perspective qui représente partiellement l'agencement selon l'invention :
- la figure 4 est une vue en coupe axiale qui représente l'agencement selon l'invention lorsque le support de rideau occupe sa position montée sur le montant de la fenêtre.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

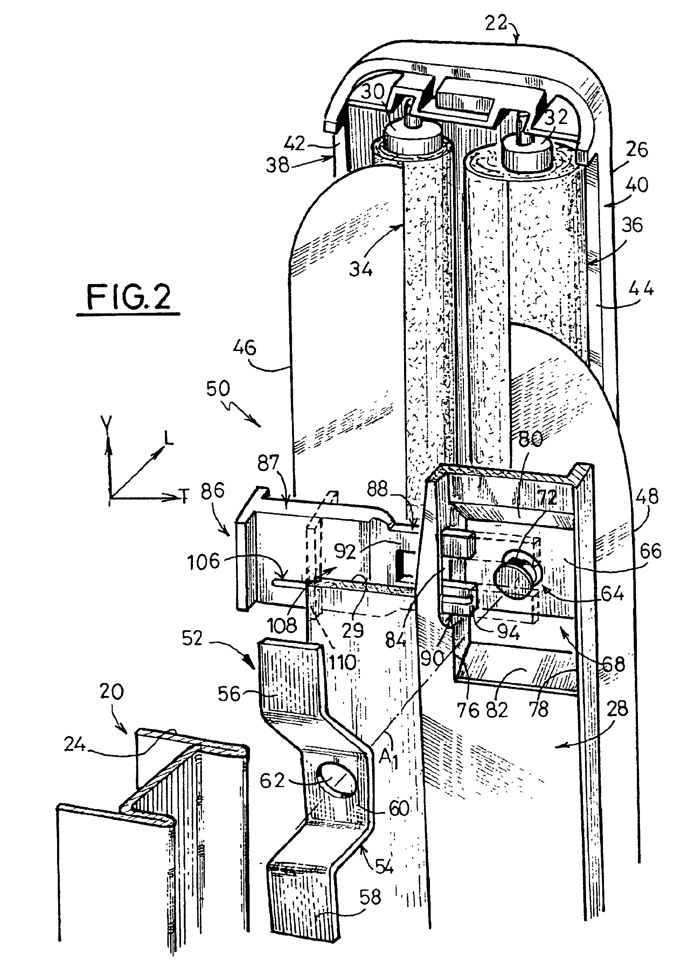

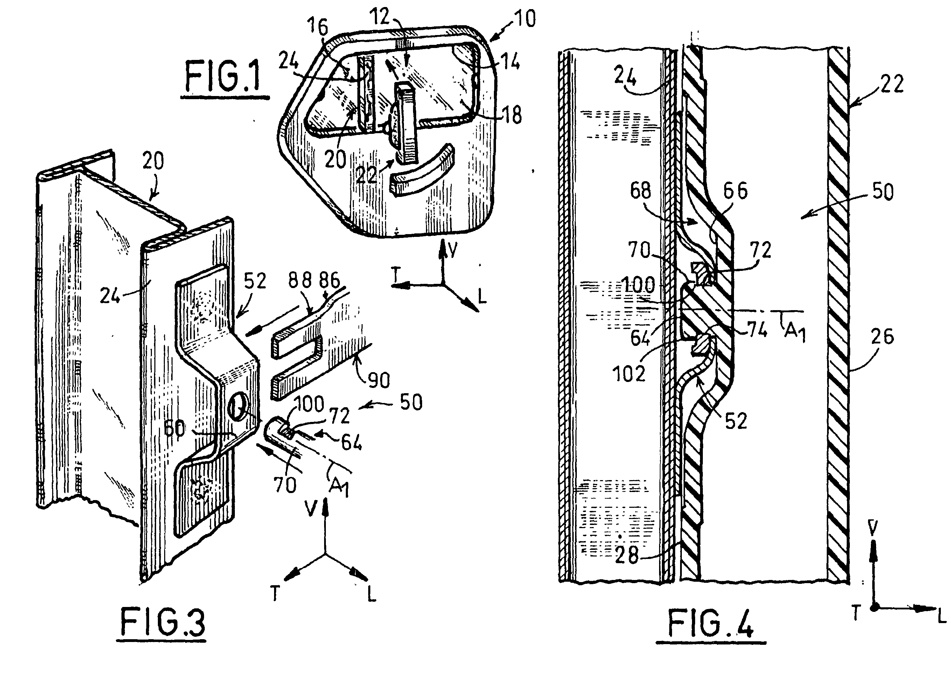

Sur la figure 1, on a représenté une portière 10 de véhicule automobile vue de l'intérieur de l'habitacle.

La portière 10 comporte une fenêtre 12 délimitée par un encadrement 14

Dans la suite de la description, on utilisera une orientation de l'extérieur vers l'intérieur de l'habitacle, suivant la direction longitudinale L, qui est ici sensiblement orthogonale au plan de la fenêtre 12. Des éléments seront donc qualifiés "d'internes" lorsqu'ils sont orientés vers l'intérieur de l'habitacle, et "d'externes" lorsqu'ils sont orientés vers l'extérieur de l'habitacle.

La fenêtre 12 comporte ici une vitre globalement triangulaire fixe 16 et une vitre globalement rectangulaire escamotable 18 qui sont séparées par un montant globalement vertical fixe 20.

La portière 10 comporte par exemple un mécanisme (non représenté) permettant de faire descendre la vitre escamotable 18 à l'intérieur de la portière 10.

Un support de rideau pare-soleil 22, ici en forme de boîtier globalement parallélépipédique, est prévu pour être fixé sur la paroi interne 24 du montant vertical 20.

Comme on peut le voir plus en détail sur la figure 2, le support 22 comporte deux parois verticales transversales respectivement interne 26 et externe 28, qui sont sensiblement parallèles à la paroi interne 24 du montant vertical 20.

Le support 22 contient deux rouleaux 30, 32 qui sont montés à rotation chacun autour d'un axe globalement vertical. Un rideau pare-soleil de vitre fixe 34 et un rideau pare-soleil de vitre escamotable 36 sont enroulés respectivement autour de chaque rouleau 30, 32.

Le support 22 comporte deux parois verticales latérales 38, 40 sensiblement orthogonales au plan de la fenêtre 12. Chacune de ces parois latérales 38, 40 comporte une fente 42, 44 permettant de dérouler le rideau pare-soleil 34, 36 correspondant transversalement depuis l'intérieur du support 22 vers l'extrémité latérale en vis-à-vis de la fenêtre 12.

Chaque rideau 34, 36 comporte, à son bord d'extrémité libre 46, 48, des moyens d'accrochage (non représentés) susceptibles de coopérer avec des moyens d'ancrage complémentaires (non représentés) portés par l'encadrement 14 de manière à permettre au rideau 34, 36 d'occuper une position d'occultation, totale ou partielle, de la fenêtre 12.

La fenêtre 12 comporte un agencement 50 pour la fixation du support 22 sur la paroi interne 24 du montant 20.

Conformément aux enseignements de l'invention, l'agencement 50 comporte au moins une plaque de fixation 52, qui est portée par la paroi interne 24 du montant 20.

Selon le mode de réalisation représenté sur les figures 2 à 4. la plaque de fixation 52 est une plaque métallique rectangulaire qui est pliée de manière à former un bossage 54 s'étendant vers l'intérieur, à partir de la paroi interne 24 du montant vertical 20.

La plaque de fixation 52 comporte, de part et d'autre du bossage 54, une portion d'extrémité supérieure 56 et une portion d'extrémité inférieure 58 planes, qui sont adjacentes à la paroi interne 24 du montant 20.

Le sommet du bossage 54 est ici formé par une portion intermédiaire plane 60 de la plaque 52. qui est sensiblement parallèle à la paroi interne 24 du montant 20 et qui est décalée longitudinalement vers l'intérieur,

La portion intermédiaire 60 comporte un trou central 62 qui est prévu pour recevoir axialement un pion de fixation 64 porté par la paroi externe 28 du support 22.

Pour la suite de la description, on définit une direction axiale A1, correspondant à l'axe de montage du pion 64 dans le trou 62, cette direction étant sensiblement parallèle à la direction longitudinale L mentionnée précedemment.

Le pion de fixation 64 est agencé sur Ja paroi de fond 66 d'une cavité 68 révisée dans la paroi externe 28 du support 22.

Comme on peut le voir plus particulièrement sur la figure 4, le pion de fixation 64 comporte ici un corps globalement cylindrique 70 muni d'une rainure transversale supérieure 72 et d'une rainure transversale inférieure 74.

Les deux rainures 72, 74 forment ici deux méplats dans le corps cylindrique 70 du pion de fixation 64.

Avantageusement, la paroi externe 28 du support 22 est réalisée par moulage, par exemple en matière plastique, et le pion 64 est réalisé venu de matière avec la paroi de fond 66 de la cavité 68.

La cavité 68 a une forme sensiblement complémentaire de la plaque de fixation 52 et de son bossage 54.

La cavité 68 comporte ici deux parois latérales 76, 78 sensiblement parallèles aux parois latérales 38, 40 du support 22, une paroi transversale supérieure 80 qui est globalement inclinée vers le haut et vers l'extérieur, et une paroi transversale inférieure 82 qui est globalement inclinée vers le bas et vers l'extérieur.

Selon le mode de réalisation représenté ici, la cavité 68 est décalée transversalement vers la paroi latérale 40 du support 22 située du côté de la vitre fixe 16, par rapport à un plan longitudinal vertical médian du support 22.

Avantageusement, la paroi latérale 76 de la cavité 68 qui est opposée à la vitre fixe 16 comporte une ouverture 84, ici de forme rectangulaire destinée à permettre l'insertion transversale d'une agrafe 86, en vue d'immobiliser le pion 64 dans le trou 62 de la plaque de fixation 52.

L'agrafe 86 comporte ici un corps globalement parallélépipédique 87 qui est parallèle à la face externe 28 du support 22 et dont une extrémité transversale, du côté du pion de fixation 64, forme une fourche comportant deux bras transversaux parallèleres 88, 90.

Chaque bras transversal 88, 90 comporte une surface radiale 92, 94, par rapport à l'axe de montage A1, orientée vers l'extérieur, qui est prévue pour venir partiellement en regard axialement d'une surface radiale de butée 96, 98 associée du pion 64, lorsque l'agrafe 86 occupe sa position montée qui est représentée en trait discontinu sur la figure 2 et en trait continu sur la figure 4.

Les surfaces radiales de butée 96, 98 du pion 64 sont ici formées par les surfaces radiales internes 100, 102, respectivement de la rainure supérieure 72 et de la rainure inférieure 74.

Avantageusement, le corps 87 de l'agrafe 86 comporte, dans sa surface transversale externe 104, une rainure transversale de guidage 106. La rainure 106 s'étend approximativement sur toute la longueur transversale de l'agrafe 86, jusqu'à l'extrémité libre du bras transversal inférieur 90,

La rainure de guidage 106 est prévue pour coopérer, par exemple, avec des ergots ou une nervure complémentaire (non représentés) réalisés sur la face interne de la paroi externe 28 du support 22, de manière à guider transversalement l'agrafe 86 dans le support 22.

Le support 22 comporte un logement 108 qui est formé sur la face interne 29 de la paroi externe 28 du support 22, et qui est agencé transversalement entre l'ouverture 84 de la cavité 68 et la paroi latérale opposée 38 du support 22.

Le logement 108 est prévu pour recevoir le corps 87 de l'agrafe 86 de manière complémentaire. Il comporte une découpe 110 qui est réalisée dans la paroi latérale 38 du support 22, transversalement en vis-à-vis de l'ouverture 84, et qui permet l'insertion transversale de l'agrafe 86 dans le support 22.

Avantageusement, l'agrafe 86 comporte une plaque axiale verticale, ou plaque d'extrémité 112, qui est agencée à son extrémité transversale opposée au pion de fixation 64, de manière à fermer la découpe 110 du logement 108 et à former une butée transversale pour l'agrafe 86, lorsque l'agrafe 86 occupe sa position montée.

On décrira maintenant l'opération de montage du support 22 sur le montant vertical 20 de la fenêtre 12,

Le montant vertical 20 étant préalablement équipé de sa plaque de fixation 52, qui est par exemple rapportée sur la paroi interne 24 du montant 20 par soudage, on amène axialement le pion de fixation 64 dans le trou 62 de la plaque de fixation 52.

Lorsque le pion de fixation 64 est reçu entièrement dans le trou 62, il s'étend axialement du côté de la face externe de la portion centrale 60 de la plaque de fixation 52.

On vient alors insérer l'agrafe 86 transversalement dans son logement 108, à travers la découpe 110, jusqu'à ce que les bras transversaux 88, 90 de l'agrafe 86 traversent l'ouverture 84 et qu'ils soient reçus dans les rainures correspondantes 72, 74 du pion de fixation 64.

La plaque d'extrémité 112 de l'agrafe 86 vient alors en butée transversale contre le bord de la découpe 110, et l'agrafe 86 occupe sa position montée, comme on l'a représenté en trait discontinu sur la figure 2 et en trait continu sur la figure 4.

Avantageusement, dans la position montée de l'agrafe 86, la plaque d'extrémité 112 est affleurante avec la paroi latérale associée 38 du support 22.

On note que les bras 88, 90 de l'agrafe 86 peuvent comporter des moyens d'emboîtement (non représentés), susceptibles de coopérer avec le pion de fixation 64, par exemple par déformation élastique, de manière à retenir transversalement l'agrafe 86 en position montée.

Dans la position montée de l'agrafe 86, le support 22 occupe sa position montée sur la paroi interne 24 du montant vertical 20. telle qu'on l'a représentée sur la figure 4.

Le support 22 est alors retenu sur le montant 20, axialement par l'agrafe 86 dont les surfaces radiales 92, 94 sont en appui axial contre les surfaces de butée associées 100, 102 du pion 64, et verticalement par le pion 64 dont le corps cylindrique 70 est en appui radialement contre les bords du trou 62 de la plaque de fixation 52.

On note que la plaque de fixation 52 forme, entre la portion intermédiaire 60 et la paroi interne 24 du montant 20, et entre les deux portions d'extrémité 56, 58, un espace qui permet le passage de l'agrafe 86 entre la portion intermédiaire 60 et la paroi interne 24 du montant 20.

Un avantage de l'agencement selon l'invention est que l'insertion de l'agrafe 86 peut être réalisée "en aveugle", notamment grâce au guidage transversal de l'agrafe 86 dans le support 22.

De plus, l'agrafe 86 peut être préalablement insérée partiellement dans son logement 108, comme on l'a représenté sur la figure 2, avant le montage du support 22 sur le montant 20.

Selon cette variante de montage, on amène axialement le support 22, déjà équipé de l'agrafe 86, sur le montant 20, en engageant le pion 64 dans le trou 62. Il suffit alors de pousser transversalement l'agrafe 86 jusqu'à sa position de butée transversale, de sorte que le support 22 soit retenu dans sa position montée.

On note que l'agencement du pion de fixation 64 dans une cavité 68 permet de minimiser l'espace axial entre la paroi externe 28 du support 22 et la paroi interne 24 du montant 20, comme cela apparaît notamment sur la figure 4. L'agencement 50 est alors "camouflé" et logé dans l'épaisseur axiale du support 22.

Bien entendu, on comprendra que le support 22 et le montant 20 peuvent comporter plusieurs agencements 50 tels que celui qui a été décrit précédemment. En particulier, le montant 20 peut comporter deux plaques de fixation 52, agencées respectivement au voisinage des extrémités supérieure et inférieure du montant 20. et le support 22 peut comporter deux pions de fixation 64 associés, ainsi que deux agrafes 86 associées.

## Revendications

1. Agencement (50) pour la fixation d'un support de rideau pare-soleil (22) sur la paroi interne (24) d'un montant (20) globalement vertical d'une fenêtre latérale (12) de véhicule automobile, du type dans lequel le support (22) est fixé sur le montant (20) de manière que le rideau (34, 36) puisse occuper au moins une position d'occultation, dans laquelle le rideau (34. 36) couvre au moins une partie de la fenêtre (12), et une position escamotée, **caractérisé en ce que** :
- la paroi interne (24) du montant (20) comporte au moins une plaque de fixation (52) qui est munie d'un trou axial (62).
- la paroi externe (28) du support (22) comporte au moins un pion de fixation (64) qui s'étend axialement vers l'extérieur pour être reçu dans le trou (62) de la plaque (52), et qui comporte au moins une surface sensiblement radiale de butée (100. 102), orientée vers l'intérieur,
et **en ce que**, en position montée du support (22) sur le montant (20), une agrafe (86) est insérée transversalement, du côté de la face externe de la plaque de fixation (52), de manière qu'une surface sensiblement radiale d'appui (92, 94), orientée vers l'extérieur, de l'agrafe (86), vienne se positionner en regard axialement de la surface de butée (100, 102) du pion (64) et retienne axialement le pion (64) dans le trou (62).

2. Agencement (50) selon la revendication précédente, **caractérisé en ce que** l'agrafe (86) comporte deux surfaces d'appui (92, 94) appartenant respectivement à deux bras (88, 90) de l'agrafe (86) qui sont parallèles à la direction transversale d'insertion, et **en ce que** le pion (64) comporte deux surfaces de butée (100, 102), sensiblement diamétralement opposées, qui sont associées respectivement a chaque surface d'appui (92, 94) de l'agrafe (86)

3. Agencement (50) selon l'une quelconque des revendications précédentes, **caractérisé en ce que** le corps (70) du pion (64) est muni d'au moins une rainure transversale (72. 74) et **en ce qu'**une surface sensiblement radiale (100, 102) de la rainure (72, 74) forme la surface de butée du pion (64).

4. Agencement (50) selon l'une quelconque des revendications précédentes, **caractérisé en ce que** le pion (64) s'étend axialement depuis le fond d'une cavité (68) réalisée dans la paroi externe (28) du support (22), et **en ce que** la plaque de fixation (52) forme un bossage (54) globalement complémentaire de la cavité (68), le trou (62) étant agencé globalement au sommet du bossage (54), de manière à minimiser l'espace axial entre la paroi externe (28) du support (22) et la paroi interne (24) du montant (20)

5. Agencement (50) selon la revendication précédente, **caractérisé en ce que** la cavité (68) comporte une paroi axiale sensiblement verticale (76) qui est munie d'une ouverture transversale (84) pour permettre le passage de l'agrafe (86).

6. Agencement (50) selon la revendication précédente, **caractérisé en ce que** le support (22) comporte un logement (108) prévu pour recevoir l'agrafe (86) de manière complémentaire.

7. Agencement (50) selon la revendication précédente, **caractérisé en ce que** le logement (108) comporte des moyens pour le guidage transversal de l'agrafe (86).

8. Agencement (50) selon l'une quelconque des revendications précédentes, **caractérisé en ce que** le corps (70) du pion (64) est globalement cylindrique.

9. Agencement (50) selon l'une quelconque des revendications précédentes, **caractérisé en ce que** la plaque de fixation (52) est rapportée sur le montant (20) de la fenêtre (12).

10. Agencement (50) selon la revendication précédente, **caractérisé en ce que** la plaque de fixation (52) est réalisée en tôle et **en ce qu'**elle est soudée sur le montant (20) de la fenêtre (12).

## Claims

1. An arrangement (50) for fastening a sunscreen support (22) to the inner wall (24) of a substantially vertical upright (20) of a side window (12) of an automobile vehicle, of the type in which the support (22) is fastened on the upright (20) so that the screen (34, 36) may occupy at least a screening position, in which the screen (34, 36) covers at least part of the window (12), and a retracted position, **characterised in that**:
- the inner wall (24) of the upright (20) comprises at least one fastening plate (52) which is provided with an axial hole,
- the outer wall (28) of the support (22) comprises at least one fastening pin (64) which extends axially outwards in order to be received in the hole (62) of the plate (52) and which comprises at least one substantially radial, inwardly oriented abutment surface (100,102),
and **in that** in the position in which the support (22) is mounted on the upright (20), a clip (86) is inserted transversely from the side of the outer surface of the fastening plate (52) so that a substantially radial, outwardly oriented bearing surface (92, 94) of the clip (86) is positioned axially opposite the abutment surface (100, 102) of the pin (64) and axially retains the pin (64) in the hole (62).

2. An arrangement (50) as claimed in the preceding claim, **characterised in that** the clip (86) comprises two bearing surfaces (92, 94) belonging respectively to two arms (88,90) of the clip (86) which are parallel to the transverse direction of insertion, and **in that** the pin (64) comprises two substantially diametrically opposed abutment surfaces (100, 102) which are respectively associated with each bearing surface (92; 94) of me clip (86).

3. An arrangement (50) as claimed in any one of the preceding claims, **characterised in that** the body (70) of the pin (64) is provided with at least one transverse groove (72, 74) and **in that** a substantially radial surface (100, 102) of the groove (72, 74) forms the abutment surface of the pin (64).

4. An arrangement (50) as claimed in any one of the preceding claims, **characterised in that** the pin (64) extends axially from the base of a cavity (68) provided in the outer wall (26) of the support (22) and **in that** the fastening plate (52) forms a boss (54) which is substantially complementary with the cavity (68), the hole (62) being arranged substantially at the top of the boss (54) so as to minimise the axial space between the outer wall (28) of the support (22) and the inner wall (24) of the uptight (20).

5. An arrangement (50) as claimed in the preceding claim, **characterised in that** the cavity (68) comprises a substantially vertical axial wall (76) which is provided with a transverse opening (84) to enable the passage of the clip (86).

6. An arrangement (50) as claimed in the preceding claim, **characterised in that** the support (22) comprises a housing (108) adapted to receive the clip (86) in a complementary manner.

7. An arrangement (50) as claimed in the preceding claim, **characterised in that** the housing (108) comprises means for the transverse guiding of the clip (86).

8. An arrangement (50) as;claimed in any one of the preceding claims, **characterised in that** the body (70) of the pin (64) is substantially cylindrical.

9. An arrangement (50) as claimed in any one of the preceding claims, **characterised in that** the fastening plate (52) is mounted on the upright (20) of the window (12).

10. An arrangement (50) as claimed in the preceding claim, **characterised in that** the fastening plate (52) is made from sheet metal and **in that** it is welded to the upright (20) of the window (12).

## Patentansprüche

1. Anordnung (50) für die Befestigung eines Sonnenvorhangträgers (22) an der inneren Wand (24) einer im Allgemeinen vertikalen Säule (20) eines seitlichen Fensters (12) des Kraftfahrzeugs, von der Art, bei welcher der Träger (22) an der Säule (20) derart befestigt ist, dass der Vorhang (34, 36) mindestens eine Verdunkelungsstellung, in welcher der Vorhang (34, 36) mindestens einen Teil des Fensters (12) bedeckt, und eine eingezogene Stellung einnehmen kann, **dadurch gekennzeichnet, dass**:
- die innere Wand (24) der Säule (20) mindestens eine Befestigungsplatte (52) aufweist, die mit einem axialen Loch (62) versehen ist,
- die äußere Wand (28) des Trägers (22) mindestens einen Befestigungsklotz (64) aufweist, der sich axial in Richtung nach außen erstreckt, um in dem Loch (62) der Platte (52) aufgenommen zu werden, und welcher mindestens eine im Wesentlichen radiale Anschlagoberfläche (100, 102) aufweist, die in Richtung nach innen gerichtet ist,
und dass in montierter Stellung des Trägers (22) an der Säule (20) eine Klammer (86) transversal von der Seite der äußeren Fläche der Befestigungsplatte (52) derart eingeführt ist, dass sich eine im Wesentlichen radiale Anlageoberfläche (92, 94) der Klammer (86), die in Richtung nach außen gerichtet ist, axial gegenüber der Anschlagoberfläche (100, 102) des Klotzes (64) positioniert und axial den Klotz (64) in dem Loch (62) hält.

2. Anordnung (50) nach dem vorherigen Anspruch, **dadurch gekennzeichnet, dass** die Klammer (86) zwei Anlageoberflächen (92, 94) aufweist, die jeweils zu zwei Armen (88, 90) der Klammer (86) gehören, die parallel zu der transversalen. Einführrichtung sind, und dass der Klotz (64) zwei im Wesentlichen diametral gegenüberliegende Anschlagoberflächen (100, 102) aufweist, die jeweils zu jeder Anlageoberfläche (92, 94) der Klammer (86) gehören.

3. Anordnung (50) nach irgendeinem der vorangegangenen Ansprüche, **dadurch gekennzeichnet, dass** der Körper (70) des Klotzes (64) mit mindestens einer transversalen Nut (72, 74) versehen ist und dass eine im Wesentlichen radiale Oberfläche (100,102) der Nut (72, 74) die Anschlagoberfläche des Klotzes (64) bildet.

4. Anordnung (50) nach irgendeinem der vorangegangenen Ansprüche, **dadurch gekennzeichnet, dass** der Klotz (64) sich axial ausgehend von dem Boden eines Hohlraums (68) erstreckt, der in der äußeren Wand (28) des Trägers (22) realisiert ist, und dass die Befestigungsplatte (52) einen zu dem Hohlraum (68) im Allgemeinen komplementären Vorsprung (54) bildet, wobei das Loch (62) im Allgemeinen an der Spitze des Vorsprungs (54) derart angeordnet ist, um den axialen Raum zwischen der äußeren Wand (28) des Trägers (22) und der inneren Wand (24) der Säule (20) zu minimieren.

5. Anordnung (50) nach dem vorangegangenen Anspruch, **dadurch gekennzeichnet, dass** der Hohlraum (68) eine axiale, im Wesentlichen vertikale Wand (76) aufweist, die mit einer transversalen Öffnung (84) versehen ist, um den Durchgang der Klammer (86) zu erlauben.

6. Anordnung (50) nach dem vorangegangenen Anspruch, **dadurch gekennzeichnet, dass** der Träger (22) eine Aufnahme (108) aufweist, die zum Aufnehmen der Klammer (86) auf komplementäre Art und Weise vorgesehen ist.

7. Anordnung (50) nach dem vorangegangenen Anspruch, **dadurch gekennzeichnet, dass** die Aufnahme (108) Mittel für die transversale Führung der Klammer (86) aufweist.

8. Anordnung (50) nach irgendeinem der vorangegangenen Ansprüche, **dadurch gekennzeichnet, dass** der Körper (70) des Klotzes (64) im Allgemeinen zylindrisch ist.

9. Anordnung (50) nach irgendeinem der vorangegangenen Ansprüche, **dadurch gekennzeichnet, dass** die Befestigungsplatte (52) an der Säule (20) des Fensters (12) angefügt ist.

10. Anordnung (50) nach dem vorangegangenen Anspruch, **dadurch gekennzeichnet, dass** die Befestigungsplatte (52) aus Blech realisiert ist und dass sie ah der Säule (20) des Fensters (12) angeschweißt ist.
